# EUROPÄISCHE PATENTANMELDUNG

(11) **EP 3 168 101 A1**
(43) Veröffentlichungstag der Anmeldung: **17.05.2017**
(21) Anmeldenummer: 16198137.8
(22) Anmeldetag: 10.11.2016
(51) Int. Cl.: B60W 10/18, B60W 20/15, B60W 30/188, B60W 40/06, B60L 1/00, B60L 1/02, B60L 7/00, B60L 11/02, B60L 15/20

(54) **VERFAHREN ZUR KOORDINIERTEN STEUERUNG VON KOMPONENTEN EINES SCHIENENFAHRZEUGS MIT HYBRIDANTRIEB ZUR SENKUNG DES ENERGIEBEDARFS, INSBESONDERE DES KRAFTSTOFFVERBRAUCHS**

(30) Priorität: 11.11.2015 DE 102015222218
(71) Anmelder: Deutsche Bahn AG, 10785 Berlin (DE)
(72) Erfinder: Claus, Sören, 09456 Chemnitz (DE)

(57) **Zusammenfassung**

Die Erfindung betrifft ein Verfahren zur koordinierten Steuerung von Komponenten eines Schienenfahrzeugs mit Hybridantrieb zur Senkung des Energiebedarfs, insbesondere des Kraftstoffverbrauchs.

Der Erfindung liegt die Aufgabe zugrunde, ein Energie- und Leistungsmanagementsystem zu implementieren, welches umfassend alle Komponenten integriert und einbezieht.

Dies wird erfindungsgemäß dadurch erreicht, dass
eine Einbeziehung von nicht-komfortbezogenen Hilfsbetrieben des Schienenfahrzeugs durchgeführt wird, wobei die Druckluftversorgung des Schienenfahrzeugs in der Weise durchgeführt wird, dass das Luftvolumen
- auch zu Zeiten ergänzt wird, in der der Druck der Druckluftanlage sich oberhalb des unteren ursprünglichen Einschaltschwellwerts der Kompressoranlage befindet, wenn durch das dadurch bewirkte zeitliche Vorziehen des Leistungsbedarfs Arbeitspunkte höheren Wirkungsgrads im Zusammenwirken von Verbrennungsmotor(en), Antriebsanlage einschließlich des Betriebsmodus der generatorischen Rückspeisung und Energiespeicher erreicht werden;
- die konventionelle zweipunktabhängige Druckregelung als eine Rückfallebene dient, die einen Schutz vor unzulässigem Unterdruck und Überdruck gewährleistet.

## Beschreibung

Die Erfindung betrifft ein Verfahren zur koordinierten Steuerung von Komponenten eines Schienenfahrzeugs mit Hybridantrieb zur Senkung des Energiebedarfs, insbesondere des Kraftstoffverbrauchs.

Ein Schienenfahrzeug mit Verbrennungsmotorantrieb und Energiespeicher hat folgende Quellen und Verbraucher an Leistung bzw. Energie, bezogen auf das System Fahrzeug:
- Der Verbrennungsmotor ist immer eine Quelle.
- Der Antrieb kann fahrzustandsabhängig sowohl Verbraucher (Antreiben) oder Quelle (Bremsen) sein.
- Die Hilfsbetriebe (z.B. Lüfter, Klimaanlage, Licht u.ä.) sind immer Verbraucher.
- Der Speicher ist in den Grenzen des Speicherinhalts frei als Quelle oder Verbraucher nutzbar.

Der Verbrennungsmotor muss den Leistungsbedarf des Fahrzeugs decken, soweit dieser nicht durch andere Quellen bereitgestellt werden kann. Die Leistungsabgabe des Verbrennungsmotors ist zwischen einer maximalen Leistungsabgabe und keiner Leistungsabgabe (Leerlauf bzw. abstellen) einstellbar, wobei der Wirkungsgrad deutlich arbeitspunktabhängiger ist, als bei anderen Komponenten.

Der Leistungsbedarf des Antriebs bzw. seine Rückspeiseleistung sind von der Transportaufgabe abhängig (z.B. von Position und Geschwindigkeit des Zuges auf einer Strecke mit Neigungen und Kurven).

Der Leistungsbedarf der Hilfsbetriebe ist im Wesentlichen vorgegeben durch technische Notwendigkeiten (z.B. Lüfterleistung, Bremsluftbedarf, Klimavorgaben). In gewissen Grenzen ist eine Variation der Hilfsbetriebeleistung möglich, wie z.B. kurzzeitige Einschränkung der Heizleistung.

Für eine Senkung des Energieverbrauchs bei gegebener Transportaufgabe kann man ein Energiemanagement einrichten, das den Energiefluss so arrangiert, dass bei Einhaltung des Fahrplans der verlorene Energieumsatz (d.h. Kraftstoffbedarf) minimiert wird.

Mögliche Maßnahmen sind dabei:
- Möglichst häufige Verwendung energetisch günstiger Arbeitspunkte im Gesamtsystem des Fahrzeugs. Der Wirkungsgrad der einzelnen Komponenten ist individuell abhängig von dem Arbeitspunkt, in dem die Komponente zu einem bestimmten Zeitpunkt betrieben wird. Ein klassisches Beispiel dafür ist der Verbrennungsmotor, der einen veränderlichen spezifischen Kraftstoffverbrauch in Abhängigkeit von Drehzahl und Drehmoment besitzt. Für andere Komponenten kann dies ebenso zutreffen.
- Vorausschau des Fahrtverlaufs erlaubt eine Prognose des Leistungsbedarfs und -angebots des Antriebs.
- Nutzung der Fahrplanreserve für häufigere Nutzung von Arbeitspunkte mit optimalem Wirkungsgrad, auch wenn dies mit einer zeitweiligen Leistungsreduktion verbunden ist.
- Durch den Energiespeicher wird es möglich, das Potenzial mechanischer Bremsenergie weitaus höher auszunutzen. Ohne einen solchen musste man die Bremsleistung, die die Hilfsbetriebeleistung unter Berücksichtigung des Übertragungswirkungsgrads überstieg, in Bremswiderständen in Wärme umwandeln, wodurch sie für eine weitere Nutzung verloren war.
- Der Energiespeicher kann des Weiteren auch dazu genutzt werden, den Verbrennungsmotor zeitweilig auf einem höheren oder niedrigeren Leistungsniveau zu betreiben, als die Transportaufgabe erfordert, um Arbeitspunkte besseren Wirkungsgrads zu erreichen. Die fehlende bzw. überschüssige Leistung übernimmt der Energiespeicher.
- Die Bedienung der Hilfsbetriebeleistung ist in die Steuerung der Energieflüsse einzubeziehen. Im Allgemeinen ist der Hilfsbetriebebedarf prioritär, denn z.B. ohne Komponentenkühlung oder Bremsdruckluft ist ein sicherer und zuverlässiger Betrieb des Fahrzeugs nicht möglich. In gewissen Grenzen ist eine Variation der Hilfsbetriebeleistung jedoch möglich. Zum Beispiel lässt sich mit geringer Komforteinbuße die Heizleistung kurzzeitig reduzieren, wenn die fehlende Wärmemenge zeitlich versetzt ersetzt wird.
- Bei der Steuerung der Energieflüsse muss zur Berücksichtigung des Ziels der Energieeinsparung beachtet werden, dass der Transfer der Energie nicht verlustfrei in Bezug auf den Nutzenergieumsatz (Antrieb, Hilfsbetriebe) erfolgt. Beispielsweise durchläuft die Energie des Energiespeichers zweimal den Wirkungsgrad der Energiewandlung am Ein- bzw. Ausgang des Speichers.
- Die Umsetzung der errechneten Fahrstrategie kann sowohl über eine Empfehlung an den Triebfahrzeugführer (Fahrerassistenzsystem), als auch durch eine automatische führerlose Steuerung erfolgen.

Dadurch ist es zum einen möglich, die Wahrscheinlichkeit der Benutzung energieoptimaler Arbeitspunkte des Antriebs zu erhöhen und zum anderen den Anteil der Rückgewinnung kinetischer Energie beim Bremsen zu verbessern.

Die oben genannten Bestandteile einer Strategie zur Steuerung des Energie- bzw. Leistungsflusses sind enthalten in den Patenten:
Durch das Patent EP 2108561 B1 (Siemens) ist bekannt, dass bei fehlender Leistungsanforderung durch die Traktion der Energiespeicher die Versorgung der restlichen Verbraucher übernimmt und der Verbrennungsmotor abgestellt wird. Anders gesagt, der Verbrennungsmotor soll nur genutzt werden, wenn er auf günstigen Arbeitspunkten hinsichtlich des Kraftstoffverbrauchs arbeitet.

Das EP 2 323 887 B1 (MTU) zeigt den Weg zu Zwischenwerten beim Energiemanagement. Hier wird eine Gewichtungsfunktion definiert, die jedem Arbeitspunkt Kosten zuordnet (zum Beispiel entsprechend dem Kraftstoffverbrauch, aber auch andere Kriterien sind denkbar). Zum Finden des Minimums einer mit Gewichtungsfunktion gekoppelten Zielfunktion hält die Mathematik ein eigenes Fachgebiet mit mannigfaltigen konkreten Umsetzungsmöglichkeiten bereit ("Numerische Optimierung"). Diese sind Stand der Technik; Gegenstand des Patents ist die Anwendung auf den Hybridantrieb. Mit der Gewichtsfunktion ist prinzipiell die Findung einer optimalen Kombination von Arbeitspunkten in einem kontinuierlichem Raum möglich (d.h. auch Zwischenwerte).

Das Patent DE 10226143 B4 (BMW) bezieht nun auch die Prognose des Fahrtverlaufs in die Auswahl der Arbeitspunkte ein und zwar "abhängig von energie-, sicherheits-, komfort-, schadstoffemissions-, geräusch- und/oder fahrertypbezogenen Vorgaben".

Der Erfindung liegt die Aufgabe zugrunde, ein Enegrgie- und Leistungsmanagementsystem zu entwickeln, welches umfassend alle Komponenten integriert und einbezieht.

Dies wird erfindungsgemäß durch den Inhalt das Patentanspruches 1 wiedergegeben.

Erfindungsgemäß wurde gefunden, dass die Einbeziehung nicht-komfortbezogener Hilfsbetriebe in das Energie- und Leistungsmanagementsystem und in die Prognosefunktion eine Verbesserung des Wirkungsgrades erreicht werden kann. Insbesondere schwankende Leistungsanforderungen durch die Drucklufterzeugung sind bisher nicht in die Prognose integriert, was die Prognosequalität und damit auch das Berechnungsergebnis verschlechtert.

Es wurde gefunden, dass unter den nicht-komfortbezogener Hilfsbetrieben eines Schienenfahrzeugs vor allem die Druckluftversorgung besondere Effekte hervorbringen kann, dadie Drucklufterzeugung mittels Kompressoren unter den Hilfsbetrieben einen relativ leistungsstarker Verbraucher darstellt. Ein- und Abschaltung ist nach dem Stand der Technik ein zufälliger Prozess: Bei Druckluftentnahme wird bei einem unteren Schwellwert die Drucklufterzeugung eingeschaltet und nach Erreichen eines oberen Schwellwertes wieder ausgeschaltet (Zweipunktregelung). Da der Verbrauch an Druckluft entsprechend dem Bremsverhalten des Fahrzeugs schwankt und das Ansprechen der Druckwächter einer gewissen Toleranz unterliegt, sind beim Stand der Technik die Zeitpunkte des Ein- und Ausschaltens unabhängig von sonstigen Steuerungsorganen, so dass bisher keine Möglichkeit der Einbeziehung der Drucklufterzeugung in ein Energiemanagement besteht.

Erfindungsgemäß wird die Drucklufterzeugung so gesteuert , dass anstelle der gegenwärtigen Zweipunktregelung der Kompressoren eine vorausschauende Druckregelung tritt, die das Luftvolumen zu Zeiten ergänzt, in denen dies energetisch günstig im Gesamtsystem erfolgen kann.

Die Erfindung weist folgende Vorteile auf:
1.) Einschalten der Drucklufterzeugung zu Zeiten, in denen energetisch ein Vorteil zum Einschalten besteht, auch wenn die untere Schaltschwelle der ursprünglichen Zweipunktregelung noch nicht erreicht ist:
   a) während der generatorischen Bremsung (Selbst wenn immer ein Energiespeicher mit Speicherkapazität zur Verfügung stünde, ist die direkte Nutzung der rückgespeisten Bremsenergie vorteilhaft durch Vermeidung der zweimaligen Umwandlungsverluste, wenn die Energie zunächst in den Energiespeicher geführt wird und später wieder hinaus.)
   b) wenn der Verbrennungsmotor nicht im Punkt des optimalen Verbrauchs arbeitet und durch die Erhöhung des Leistungsbedarfs infolge Drucklufterzeugung ein Punkt besseren Wirkungsgrads (Ausnutzung der im Kraftstoff enthaltenen Energie) erreichbar ist.
   Diese Funktion kann auch ohne Prognose von Fahrtverlauf und Druckluftbedarf wahrgenommen werden, zur Entscheidung zum Einschalten genügt die Feststellung, dass momentan eine der Situationen 1a oder 1 b vorliegt.
2.) Voraussage des Druckluftbedarfs

Es wird ein bisher nicht prognostizierter, schwankender Anteil des Leistungsbedarfs und das Energie- und Leistungsmanagement einbezogen. Ohne diese Einbeziehung leidet zum Beispiel die Qualität des Berechnungsergebnisses, wenn der gerade verwendete optimale Arbeitspunkt des Verbrennungsmotors verlassen werden muss, weil sich unvorbereitet der Kompressor einschaltet.

Die Voraussage des Druckluftbedarfs bei ungestörter Zugfahrt ermöglicht es, weitere Situationen im Sinne des Energieverbrauchs günstig zu gestalten, die durch (1) nicht abgedeckt werden können.

Zum Beispiel:
- Es ist vorhersehbar, dass nach einer pneumatischen Bremsung während der Beschleunigung auch Druckluft erzeugt werden muss. Das Energiemanagement kann den Energiespeicher vorausschauend vorher füllen, um während der Beschleunigung einen Teil des Leistungsbedarfs aus dem Speicher zu decken, während der Verbrennungsmotor auf einem energetisch vorteilhafteren Arbeitspunkt arbeitet.
- Wenn erkannt wird, dass der Druckluftbedarf für eine gewisse Zeitspanne gering sein wird, dann muss die Drucklufterzeugung nicht bis zum oberen Grenzwert des Luftdrucks fortgesetzt werden, sofern nicht gerade die Situation (1) vorliegt.

Die Voraussage des Druckluftbedarfs und des Luftdruck der Druckluftanlage des Fahrzeugs kann auf folgende Weise vorgenommen werden:
- Aus der Prognose des Fahrtverlaufs wird der Verlauf der Bremskraft als Funktion der Zeit ermittelt.
- Es werden diejenigen Bereiche identifiziert, in denen die erforderliche Bremskraft größer ist als die Bremskraft, die generatorisch durch die Fahrmotoren erzeugbar ist. Die Differenz aus beiden Bremskräften ist die Kraft, die die Druckluftbremse aufbringen muss.
- Der Zusammenhang zwischen dem zeitlichem Verlauf der Bremskraft der Druckluftbremse und dem zeitlichen Verlauf des Druckluftbedarfs ist von fahrzeugspezifischen Eigenschaften und der befahrenen Strecke abhängig. Die zur Berechnung nötigen Parameter können durch Berechnung und Tests bei Implementierung auf einer Fahrzeugbaureihe baureihenspezifisch bestimmt werden. Die zur Berechnung nötigen Streckeninformationen liegen durch das Prognosesystem für den Fahrtverlauf ohnehin vor.
- Fahrzeugspezifische Einflüsse sind zum Beispiel: Volumen und Position der Druckkessel, Wirkungsgrad der Bremszylinder, Länge und Drosseleigenschaften der Verrohrung;
- Streckenspezifische Einflüsse sind zum Beispiel: Luftfederung falls vorhanden, Typhon.
   - Abweichungen des realen Druckluftbedarfs von der Prognose sind durch Undichtigkeiten oder unvorhergesehene Betätigung von Druckluftverbrauchern möglich, werden in den allermeisten Fällen aber klein sein. Einzelne größere Abweichungen beeinträchtigen die Funktion des Fahrzeugs nicht. Das energetische Verhalten kann selbst bei extremen Abweichungen nicht schlechter sein, als ohne die Neuerung.

Die vorhandene Zweipunktregelung der Drucklufterzeugung bleibt als Rückfallebene bestehen, um im Versagensfall der energetisch motivierten Ein- oder Ausschaltung der Drucklufterzeugung die Bereitstellung von Druckluft innerhalb der konventionellen Grenzwerte sicher zu garantieren. Die zusätzliche Steuerung verändert den Luftdruck nur innerhalb der konventionellen Grenzwerte.

### Ausführungsbeispiel

Die Erfindung soll nachstehend anhand eines Ausführungsbeispiels näher erläutert werden.

Dabei zeigt:

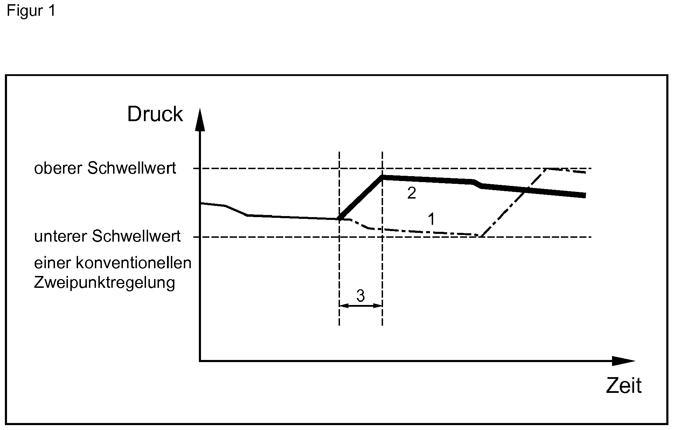

Figur 1: Beispiel für den Druckverlauf in der Druckluftanlage des Schienenfahrzeugs mit und ohne Anwendung der Erfindung

Der Kurvenverlauf 1 zeigt den zeitlichen Verlauf des Drucks bei konventioneller Zweipunktregelung mit unterem und oberem Schwellwert: Zu einem zufälligen Zeitpunkt ist der Druck so weit abgesunken, dass die Drucklufterzeugungsanlage gestartet wird. Ab diesem Zeitpunkt fordert die Drucklufterzeugung Leistung, unabhängig davon, ob dies in diesem Moment energetisch günstig ist, oder nicht. Beim Erreichen des oberen Schwellwerts wird die Drucklufterzeugung wieder abgeschaltet.

Der Kurvenverlauf 2 zeigt die erfindungsgemäße Kurve, bei der im Zeitraum 3 Leistung durch Rückspeisung aus einer Bremsung zur Verfügung steht. Aus der Vorausschau der Zugfahrt schließt das Energiemanagementtool, dass mehr Leistung bereitsteht, als für Verbraucher an Bord benötigt wird und mehr Energie, als der Energiespeicher aufnehmen könnte. Deshalb wird die Drucklufterzeugungsanlage gestartet, obwohl der Druck noch innerhalb der Toleranzgrenze liegt. Der Druck wird während der Bremsung erhöht. Die Bremsenergie wird besser ausgenutzt und es wird die spätere Drucklufterzeugung durch Leistungsgewinnung aus Kraftstoff vermieden.

## Patentansprüche

1. Verfahren zur koordinierten Steuerung von Komponenten eines Schienenfahrzeugs mit Hybridantrieb zur Senkung des Energiebedarfs, insbesondere des Kraftstoffverbrauchs,
***gekennzeichnet dadurch, dass***
eine Einbeziehung von nicht-komfortbezogenen Hilfsbetrieben des Schienenfahrzeugs durchgeführt wird, wobei die Druckluftversorgung des Schienenfahrzeugs in der Weise durchgeführt wird, dass das Luftvolumen
- auch zu Zeiten ergänzt wird, in der der Druck der Druckluftanlage sich oberhalb des unteren ursprünglichen Einschaltschwellwerts der Kompressoranlage befindet, wenn durch das dadurch bewirkte zeitliche Vorziehen des Leistungsbedarfs Arbeitspunkte höheren Wirkungsgrads im Zusammenwirken von Verbrennungsmotor(en), Antriebsanlage einschließlich des Betriebsmodus der generatorischen Rückspeisung und Energiespeicher erreicht werden;
- die konventionelle zweipunktabhängige Druckregelung als eine Rückfallebene dient, die einen Schutz vor unzulässigem Unterdruck und Überdruck gewährleistet.

2. Verfahren nach Anspruch 1, ***gekennzeichnet dadurch, dass*** unter Beachtung der Vorausschau des Fahrtverlaufs der Verlauf der Bremskraft als Funktion der Zeit ermittelt wird.

3. Verfahren nach Anspruch 1 und 2, ***gekennzeichnet dadurch, dass*** für den prognostizierten Fahrtverlauf eine vorausschauende Berechnung des Druckluftbedarfs durchgeführt wird.

4. Verfahren nach Anspruch 1 bis 3, ***gekennzeichnet dadurch, dass*** eine Kombination verschiedener oder gleichartiger Schienenfahrzeuge oder -antriebe durchgeführt wird.
